# EUROPEAN PATENT APPLICATION

(11) **EP 1 587 005 A2**
(43) Date of publication of application: **19.10.2005**
(21) Application number: 05075848.1
(22) Date of filing: 12.04.2005
(51) Int. Cl.: G06F 17/30, H04Q 7/32

(54) **Mobile communication device support system and method for coping with multi-language management**

(30) Priority: 13.04.2004 JP 2004118017
(71) Applicant: NEC CORPORATION, Minato-ku, Tokyo 108-01 (JP)
(72) Inventor: Muramatsu, Toshihiko, Minato-ku Tokyo (JP)
(74) Representative: Wenzel & Kalkoff

(57) **Abstract**

A multi-language coping support system comprises a mobile communication device and a language management apparatus. The device comprises a data base memorizing display character strings associated with message IDs; a unit selecting a language for the display character strings; a unit transmitting, to the language management apparatus, language-setting data specifying both the language selected and a type of the device; and a unit updating, for every message ID, the display character strings in the data base, based on the display character strings transmitted. The apparatus comprisesadatabaseinwhich, for every device type and every language, the display character strings are stored in association with the message IDs; a unit searching the data base for data of display character strings conforming to the specified device type and language; and a unit transmitting to the mobile communication device the display character strings searched.

## Description

### BACKGROUND OF THE INVENTION

### 1. The field of the invention

The present invention relates to a mobile communication device, a support system and method for coping with multiple languages, and a language management apparatus, and in particular, to providing a multi-language technique to a mobile communication device such as portable phone and PHS (Personal Handyphone System) and a potable communication apparatus (hereinafter referred to as "mobile communication device" as a generic term).

### 2. Description of the Related Art

In recent years , it has been known that a mobile communication device provides a display unit with the function of displaying character strings such as various menus and messages using multiple languages. In order to obtain this multi-language supporting function, the device has a memory in which character strings for each language are preserved and managed. Concerning mobile communication devices to be used in Japan, such a multi-language supporting function is generalized between Japanese and English. However it is desired for some users that other languages, for example, Chinese, France and German are also incorporated into the multi-language supporting function. There has therefore been a demand for coping with those languages other than Japanese and English.

By the way, recently available portable phones have experienced high performance and multifunction to a great degree. Hence, types and contents of data, which are stored in a memory of the device by a user, have increased. Those data include character data such as memory dials and electronic mails, audio data such as melodies signaling incoming calls, video data acquired by an internal camera, and various application programs including games downloaded from a server on the Web. Hence there has also been a demand for improving efficiency of use of the memory to store various data therein.

On the other hand, a prior technique relevant to the present invention has been proposed by JP-A-2002-77415. This publication teaches a provided-information communication method by which it is possible to transmit provided information that can be displayed in a user's desired language. In using this method, information indicative of a specified language is transmitted from a user's terminal to a language management gateway in a telecommunications carrier's management system and preserved in a storage of the gateway. Responsively to a connection command to use information, which is issued from the terminal, a manager in the gateway reads out the data of the specified language from the storage. Both the provided information from the server and the read-out specified language data are then transmitted from the manager to a checking unit via a communication network. In the checking unit, it is checked whether a language which can be used to display the provided information is in accordance with the specified language. When the check result shows that both languages are in accordance with each other, the provided information is transmitted to the terminal. By contrast, when the opposite check result to the above is obtained, a message saying that there is a discrepancy in the languages or the provided information described in a language other than the specified language is transmitted to the terminal.

In the conventional movable communication device, coping with the multi-language supporting function requires that a language for displaying character strings such as display menus and messages be subjected to changes and display whenever the language is newly selected. This change/display technique, however, has difficulties which will be discussed as below. At first, as the number of languages to be supported increases, an occupation of data in the memory becomes higher, thus leading to both of a decrease in user' s preservation data such as memory dials and electronic mails and a decrease in a memory area that can be assigned to application programs. Secondly, it is impossible to maintain the character strings to be displayed of the mobile communication device after shipping it. Moreover, a third difficulty is that languages other than the language prepared in the device cannot be used for display of character strings.

### SUMMARY OF THE INVENTION

An object of the present invention is to provide, with due consideration to the difficulties of the above conventional techniques, a system having a multi-language supporting function capable of preventing a decrease in efficiency of data stored in a memory (the decrease is caused when coping with use of multi-languages for character strings to be displayed), thus improving the efficiency of use of the memory, of facilitating maintenance of languages to be used for character strings to be displayed, and of making it possible to easily add languages to use to the device.

In order to achieve the above object, as one aspect of the present invention, there is provided a multi-language coping support system comprising: a mobile communication device; and a language management apparatus communicably connected with the mobile communication device and configured to manage data of display character strings to be used by the mobile communication device.

The mobile communication device comprises a character-string data base for memorizing the data of the display character strings such that the data of the display character strings are associated with message IDs; language selection means for selecting a language in which the display character strings are described; language-setting data transmission means for transmitting, to the language management apparatus, language-setting data including language specifying information for specifying the language selected by the language selection means and device-type specifying information for specifying a type of the device; anddatabaseupdatemeans for updating, everymessage ID, the data of the display character strings stored in the character-string data base, on the basis of the data of the display character strings transmitted from the language management apparatus according to the language-setting data.

The language management apparatus comprises a language management data base in which, for every type of mobile communication device and every use language, the data of the display character strings are stored in association with the message IDs; data base search means for searching the language management data base for data of display character strings conforming to both the type of the mobile communication device specified by the device-type specifying information and the use language specified by the language specifying information in response to a reception of language-setting data; and language-data transmission means for transmitting to the mobile communication device the data of the display character strings searched by the data base search means.

Preferably, the language selection means may be configured to select the language used by the data of the display character strings as a user has a look at a display screen on a predetermined language-setting contents form and the language management apparatus further comprises contents form providing means for providing the language-setting contents form.

By way of example, the language management apparatus may be a server connected to a communication network communicably connected to the mobile communication device via a base transceiver station. The language management apparatus may be a computer communicably connected to the mobile communication device via a predetermined communication interface. The language management apparatus is an external storage connected to the mobile communication device.

As another aspect of the present invention, there is provided a mobile communication device wherein data of display character strings is managed by a language management apparatus, the device comprising: a character-string data base for memorizing the data of the display character strings such that the data of the display character strings are associated with message IDs; language selection means for selecting a language on which the display character strings are described; language-setting data transmission means for transmitting, to the language management apparatus, language-setting data including language specifying information for specifying the language selected by the language selection means and device-type specifying information for specifying a type of the device; and data base update means for updating, for every message ID, the data of the display character strings stored in the character-string data base, on the basis of the data of the display character strings transmitted from the language management apparatus according to the language-setting data.

Still, as another aspect of the present invention is provided a language management apparatus communicably connected to a mobile communication device and configured to manage data of display character strings used by the mobile communication device, the apparatus comprising: a language management data base in which, for every type of mobile communication device and every use language, the data of the display character strings are stored in association with message IDs ; data base search means for searching, in response to a reception of language-setting data including language specifying information for specifying the language selected by the language selection means and device-type specifying information for specifying the type of the device, the language management data base for data of display character strings conforming to both the type of the mobile communication device specified by the device-type specifying information and the use language specified by the language specifying information; and language-data transmission means for transmitting to the mobile communication device the data of the display character strings searched by the data base search means.

According to another aspect, the present invention provides a multi-language coping support method which is performed by a system comprising a mobile communication device and a language management apparatus communicably connected with the mobile communication device and configured to manage data of display character strings to be used by the mobile communication device, the method comprising the steps of: making a character-string data base of the mobile communication device memorize the data of the display character strings such that the data of the display character strings are associated with message IDs; making a language management data base of the language management apparatus memorize, for every type of the mobile communication device and every use language, the data of the display character strings in association with the message IDs; selecting, at the mobile communication device, a language in which the display character strings are described; transmitting, from the mobile communication device to the language management apparatus, language-setting data including language specifying information for specifying the language selected and device-type specifying information for specifying the type of the device; searching the language management data base of the language management apparatus for data of display character strings conforming to both the type of the mobile communication device specified by the device-type specifying information and the use language specified by the language specifying information in response to a reception of the language-setting data; transmitting, from the language management apparatus to the mobile communication device, the data of the display character strings searched; and updating, at the character-string data base of the mobile communication device,for every message ID, the data of the display character strings stored in the character-string database, on the basis of the data of the display character strings transmitted from the language management apparatus according to the language-setting data.

Accordingly, in the present invention, there is provided a mobile communication device, a support system and method for coping with multi-languages, and a language management apparatus having a multi-language supporting function capable of preventing a decrease in efficiency of data stored in a memory (the decrease is caused when coping with use of multi-languages for character strings to be displayed), thus improving the efficiency of use of the memory, of facilitating maintenance of languages to be used for character strings to be displayed, and of making it possible to easily add languages to use to the device.

### BRIEF DESCRIPTION OF THE DRAWINGS

In the accompanying drawings:
Fig. 1 is an outlined view showing the entire configuration of an embodiment of a multi-language coping support system according to the present invention;
Fig. 2 is a block diagram outlining the internal configuration of a terminal which is used in practice as a mobile phone;
Fig. 3 illustrates an outlined configuration of programs in a memory of the terminal;
Fig. 4 illustrates an outlined configuration of a character string DB placed in the memory of the terminal;
Fig. 5 is a block diagram outlining the internal configuration of a language management server serving as a language management apparatus;
Fig. 6 illustrates an outlined configuration of programs in the language management server;
Fig. 7 is an outlined view explaining the configuration of a language management DB;
Fig. 8 is a flowchart explaining in an outlined manner how to process in the system;
Fig. 9 exemplifies some screens displayed on the portable phone, the screens corresponding to the progress in the processing shown in Fig. 8;
Fig. 10 is an outlined flowchart for explaining the processing in the language management server;
Fig. 11 explains the structure of language setting data;
Figs. 12 to 14 show the configuration of a character string DB in its initial state; and
Figs. 15 to 17 show the configuration of the character string DB to which language data has been downloaded.

### DETAILED DESCRIPTION OF THE PREFERRED EMBODIMENT

Referring to the accompanying drawings, a preferred embodiment of a mobile communication device, a support system and method for copingwithmulti-languages for the mobile communication device, and a language management apparatus according to the present invention will now be described in terms of their best modes.

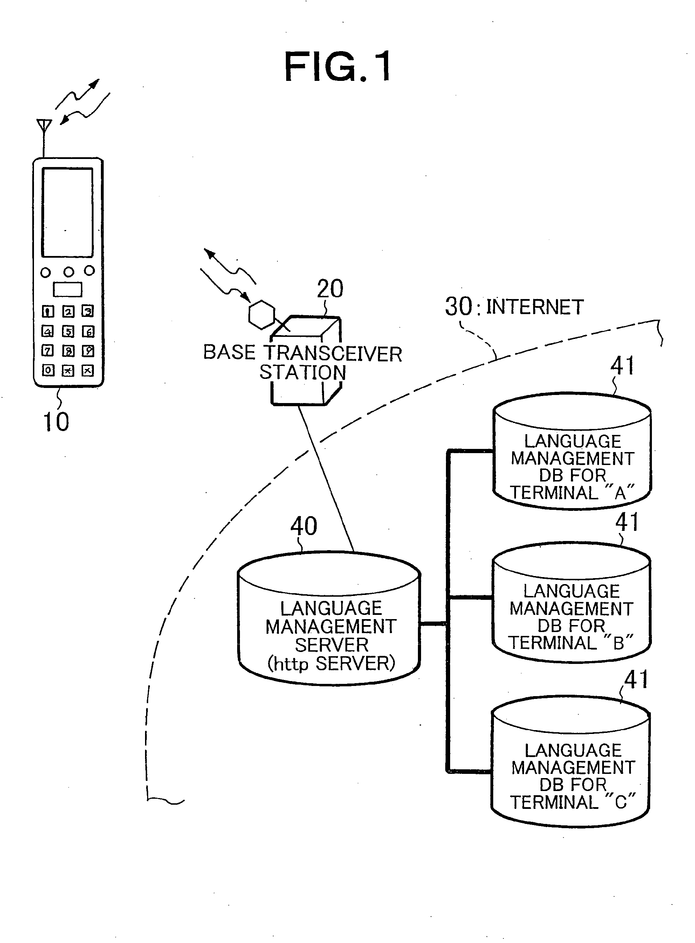

Fig. 1 outlines the multi-language coping support system according to the present embodiment.

The support system shown in Fig. 1 is provided with a mobile phone (hereinafter referred to as a "terminal") 10, a base transceiver station 20 communicable with the terminal via a wireless line, the Internet 30 serving as a communication network connected with the base transceiver station 20, and a language management server (language management apparatus) 40. Of these, the terminal 10 is a mobile communication device owned by a user (owner) and has various functions including voice communication, transmission/reception of electronic mails, and connection with the Web. The language management server 40 is an http (hyper text transfer protocol) server (also known as "Web server") connected to the Internet 30. Depending on the device type of terminal 10, plural language management data base (DB) 41 ... 41 are arranged with the language management server 40. In the example shown in Fig. 1, there are provided three different language management DBs consisting of a language management DB for the terminal "A," a language management DB for the terminal "B," and a language management DB for the terminal "C" each dedicated to each of three different terminals A, B and C.

The configuration shown in Fig. 1 enables a user to connect terminal 10 with the Web. When such a connection is established, the terminal can be connected to the language management server 40 on the Internet 30 through the base transceiver station 20. On completion of the connection, the user can use a contents form screen displayed on terminal 10 to specify (i.e., select) a desired use language on the screen. The desired language is Japanese, English, Chinese, French, German or others. In response to the specified language, the language management server 40 is configured to search one of the language management DBs 41 for language data that agrees with both the device type of the terminal 10 that has demanded the connection and the specified language. Thus the searched language data is transmitted from the sever 40 to the terminal 10. This transmission allows the terminal 10 to download and install the language data from the server 40 into an internal memory of the terminal 10, whereby the use language can be set in the terminal 10.

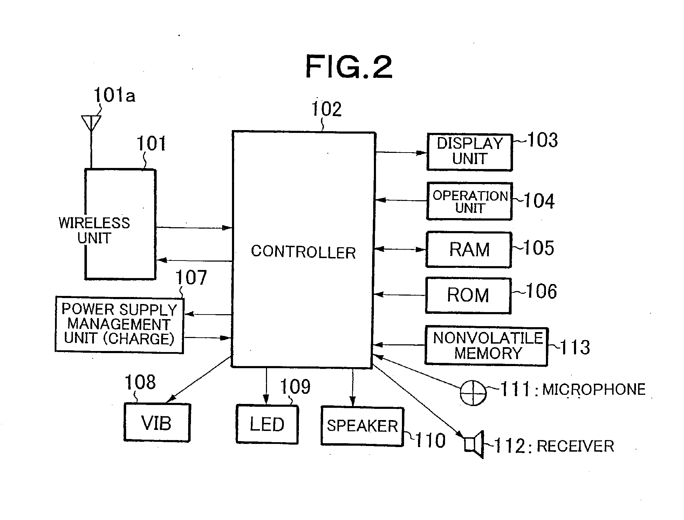

Fig. 2 exemplifies the internal configuration of the terminal 10.

The terminal 10 shown in Fig. 2 is provided with a controller 102 with a CPU (Central Processing Unit), which is responsible for the entire functional control, in addition to various other components electrically connected to the controller 102 to be controlled by the controller 102. The other components include a wireless unit 101 having an antenna 101a engaging in radio communication with the base transceiver station 20, a display unit 103 composed of liquid crystal display (LCD) and others, and an operation unit 104 such as operation keys, a RAM (Random Access Memory) 105, a ROM (Read Only Memory) 106, a power-supply manager 107, a vibrator (VIB) 108, LEDs (Light Emitting Diodes) 109, a speaker 110, a microphone 110, a receiver 112, and a nonvolatile memory 113.

The wireless unit 101 has, in addition to the antenna 101a, circuitry including a radio frequency circuit connected to the antenna 101a, a base band circuit, a control circuit and others. The radio frequency circuit has an antenna switch, transmission circuit, modulation circuit, reception circuit, demodulation circuit, local oscillator and other circuits. In this wireless unit 101, an electromagnetic wave of a predetermined frequency is used for transmission and reception of various control data, voice data during calling, communication data during connection with the Web, electronic mails, and others, management of position registration, transmission slots and reception slots of the terminal 10, and other types of processing.

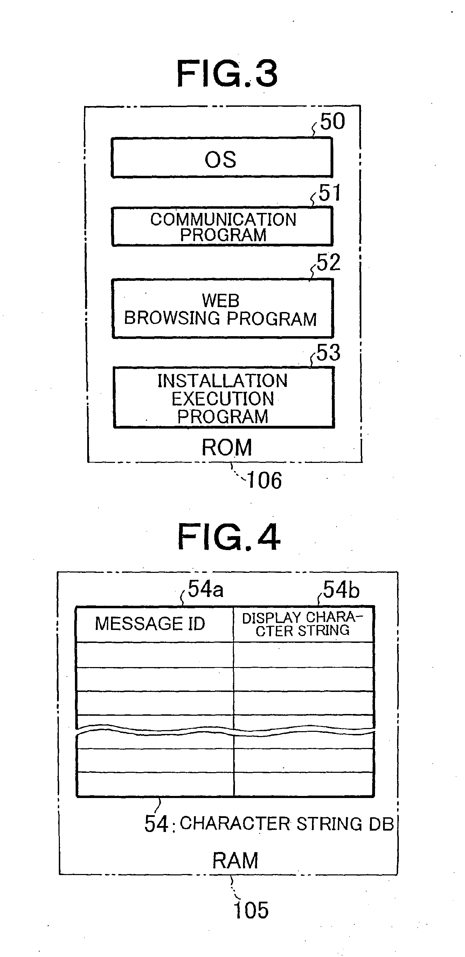

The controller 102 is configured to perform control programs (later described in Fig. 3) stored in the ROM 106. This performance realizes various types of functions responding to different operation commands from the operation units 103, voice incoming, reception of an electronic mail, connection with the Web. Such functions include a first function for displaying various menus and various data preserved by a user on the display unit 103 in cooperation with operations as the operation unit 104, a second function for notifying the user of incoming of voice or reception of an electronic mail by controlling the display unit 103, vibrator 108, LEDs 109, speaker 119, and others, and a third function for permitting input to be fed into the microphone and output to be provided from the receiver by controlling the operations of the microphone111 and receiver 112 during voice calling.

In the present embodiment, the respective means and respective steps owned by the mobile communication device according to the present invention can be accomplished by allowing the controller 102 to perform the control programs stored in the ROM 106 with the operations of the terminal 10 being controlled.

Fig. 3 illustrates an example of the configurations of programs in the ROM 106.

In the ROM 106 in Fig. 3, there are stored control programs including an OS (Operating System) 50, communication programs (communication protocol stacks) 51 such as TCP (Transmission Control Protocol) /IP (Internet Protocol) , a browsing program 52 allowing a user to browse Web contents, the Web contents being provided by the http server (Web server) on the Internet 30, and an installation execution program 53. These control programs are managed by the controller 102 in an executable manner.

Fig. 4 exemplifies the structure of data stored in the RAM 105.

The RAM 105 shown in Fig. 4 is subj ected to storing a character string data base (DB) 54. In this character string DB 54, strings of characters to be displayed (simply, display character strings) 54b, such as menus to be displayed (simply, display menu) , preset in advance for every message ID 54a is managed string by string. This character string DB 54 is designed to have read/write operations under the control of the controller 102. The RAM 105 is also capable of temporarily memorizing language data downloaded from the language management server 40, whose operations will be detailed in the following.

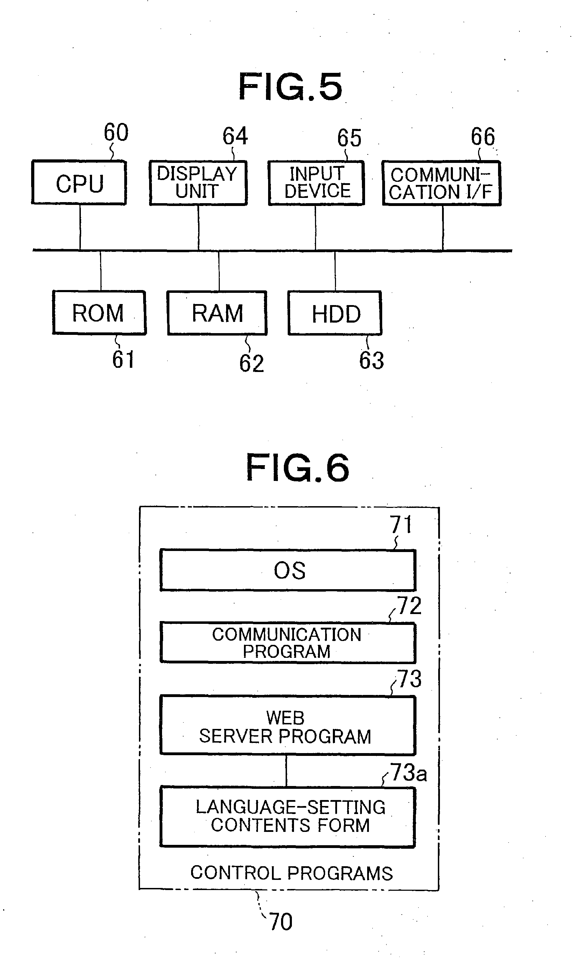

The language management server 40 is composed of a computer machine (computer) , which is for example a personal computer (PC) or a dedicated server. Fig. 5 exemplifies the internal configuration of the language management server 40, while Fig.6 illustrates the configuration of software installed in the server 40.

As exemplified in Fig. 5, the language management server 40 is equipped with a CPU 60, ROM 61, RAM 62, hard disk drive (HDD) 63, display unit 64, input unit 65, and communication interface (I/F) 66. As shown in Fig. 6, control programs 70 executable by the CPU 60 are stored in the ROM 61, RAM 62 and HDD 63. The control programs 70 include an OS 71, communicationprograms (communication protocol stacks) such as TCP/IP, and a Web server program 73.

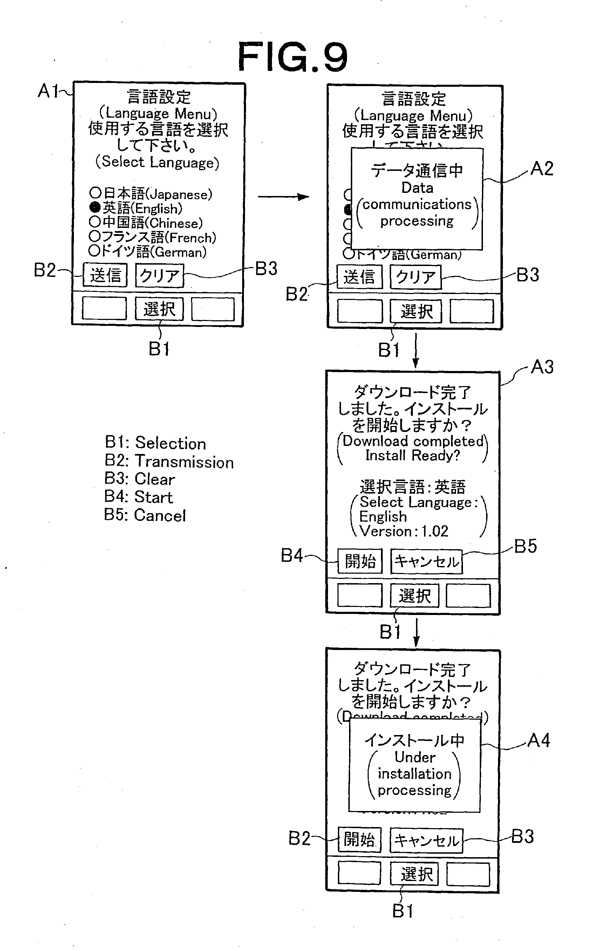

The Web server program 73 is in charge of management of a language setting contents form 73a (refer to Fig. 9 later described) , which is described using a markup language such as CHTML (Compact Hyper Text Markup Language) . The language setting contents form 73a can be browsed with the use of the browsing program 52 when the terminal 10 is Web-connected.

The means and steps functionally provided by the language management apparatus according to the present invention are realized when the CPU 60 executes the control programs 70 to control the operations of the language management server 40.

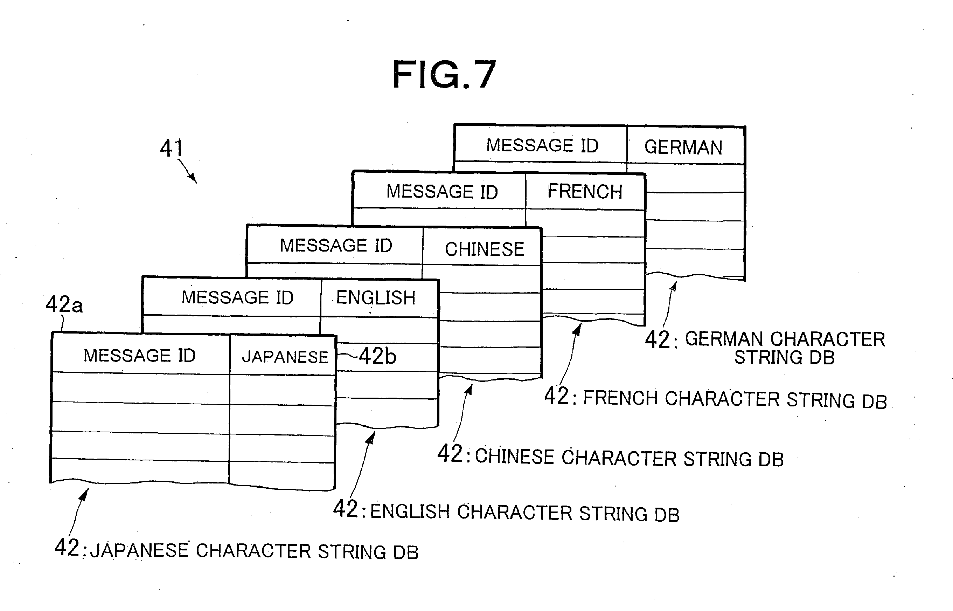

Fig. 7 shows an example of the configuration of tables that the language management DBs 41 for the terminals A to C possesses.

As shown in Fig. 7, the language management DBs 41 for the terminals A to C have, language by language, character string DBs 42 ... 42. The example in Fig. 7 includes a Japanese character string DB, English character string DB, Chinese character string DB, French character string DB, and German character string DB, which are prepared beforehand. In each of the tables of the character string DB 42, there are mapped a plurality of pairs each consisting of message IDs 42a and character strings 42b described at each language and determined in association with each of the message IDs. The message IDs 42a correspond to the message IDs 54a in the character string DB 54 stored in the memory of the terminal 10, so that the message IDs 42a are different from one another among the device types of the terminals 10 (i.e., terminals A to C).

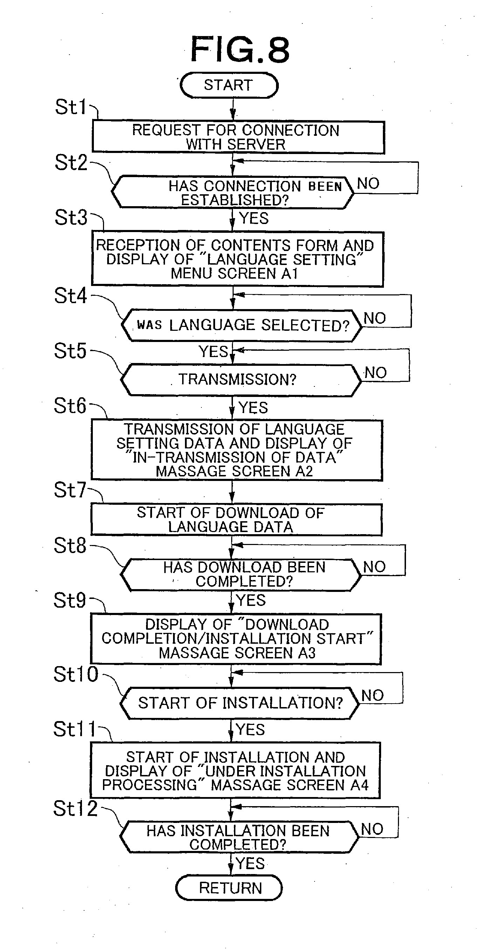

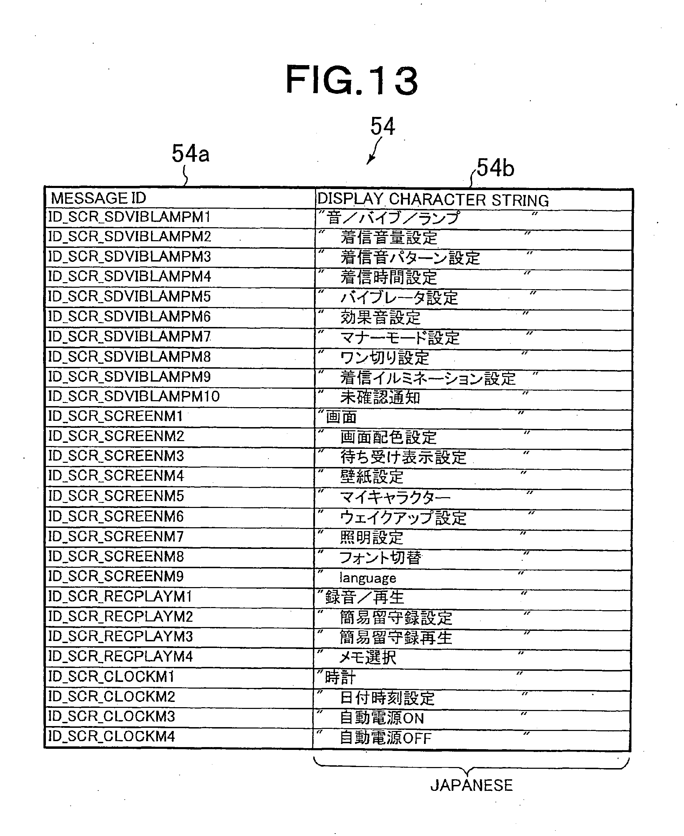

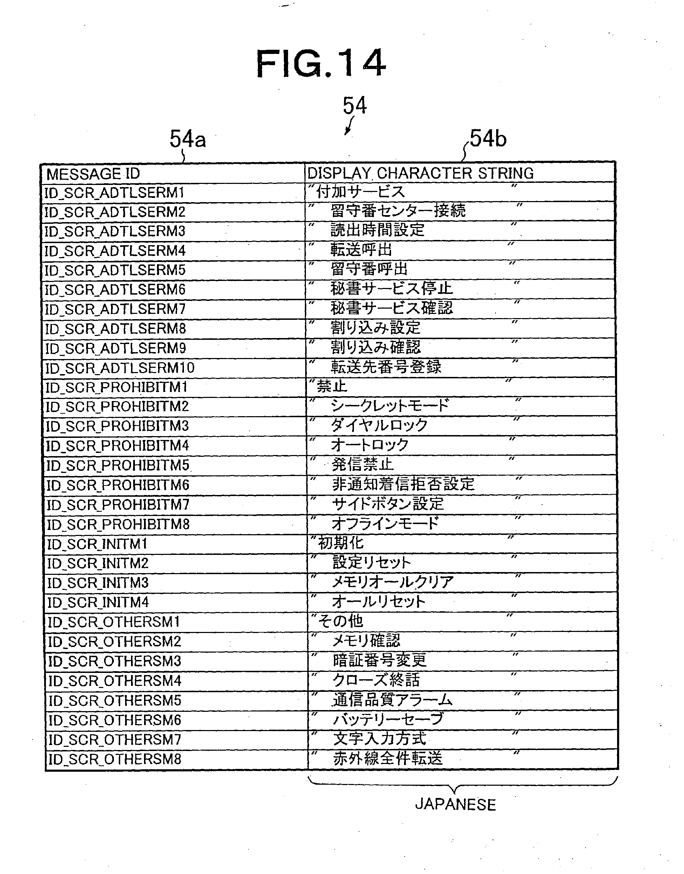

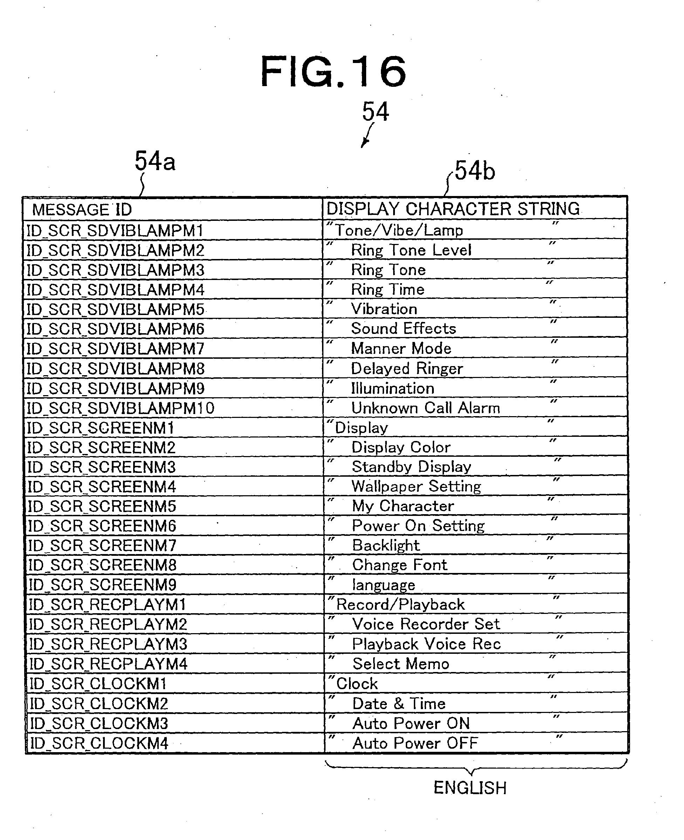

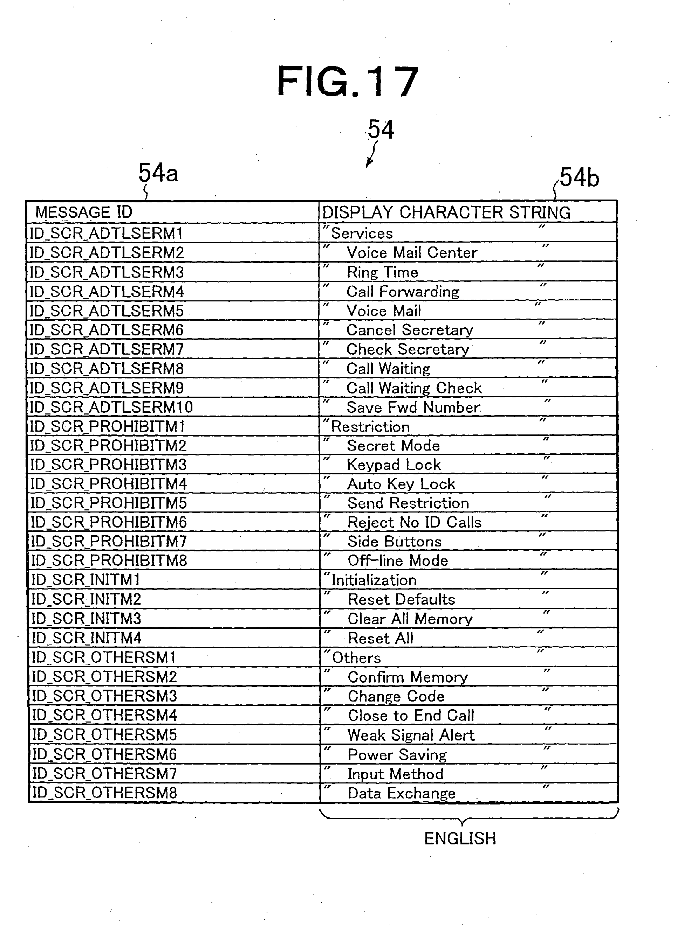

In connection with Figs. 8 to 17, the entire operations of the system in the present embodiment will now be described.

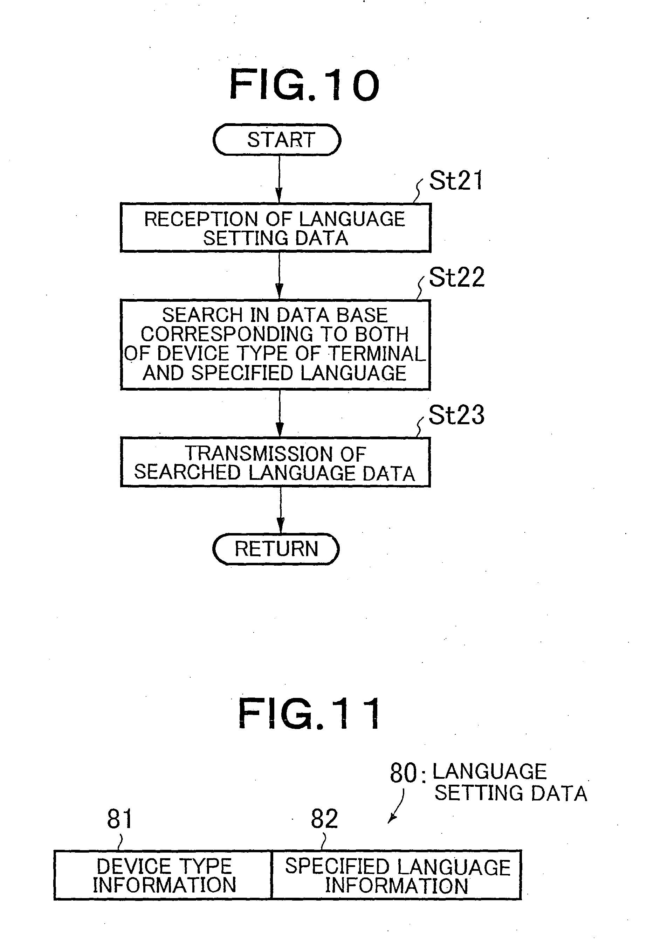

Fig. 8 shows an example of processing performed by the terminal 10, Fig. 9 shows an example of a screen displayed on the terminal 10, Fig. 10 shows an example of processing performed by the language management server 40, and Fig. 11 shows an example of the configuration of data for setting a language (simply, language setting data) , respectively. The following description will be given on the assumption that the type of the terminal 10 is given as "terminal A," a use language in the initial state of the terminal 10 is given as "Japanese," and another language desired by the user is given as "English."

As shown in Fig. 8, the terminal 10 first responds to a user's Web-connecting operation by issuing a connection command to the language management server 40 on the Internet 30 through the base transceiver station 20 (step St1). After having established the connection with the language management server 40 (step St2) , the terminal 10 receives data of a language setting contents form 73a from the server 40 to display a "language setting" menu screen A1 on the display unit 103 based on the received form data, as shown in Fig. 9 (step St3). The menu screen A1 shown in Fig. 9 includes both of a list of languages to be set, which is composed of "Japanese," "English," "Chinese," "French," and "German," and operation buttons which are composed of a "selection" button B1, a "transmission" button B2 , and a "clear" button B3. While having a look at the "language setting" menu screen A1 displayed on the display unit 103, the user operates the "selection" button B1 to mark a desired language, whereby a use language can be selected on the menu A1. If a correction is necessary to change languages to be marked, the "clear" button B3 is pushed down to delete the mark, before the selection is made again. Pushing the "transmission" button B2 permits language setting data to be transmitted.

On the terminal 10, the "selection" button B1 is operated to select a desired language (in this case, "English" is selected) , and then the "transmission" button B2 is pushed down (steps St4 and St5). Thus language setting data 80 shown in Fig. 11 is transmitted to the language management server 40 via the base transceiver station 20 and the Internet 30, whilst an "in-transmission of data" message screen A2 shown in Fig. 9 is displayed on the terminal 10 (step St6).

The language setting data 80 shown in Fig. 11 includes information 81 indicating the device type of the terminal (type information) and information 82 indicating the language that has been specified by the selection. Of these, the device type information 81 is identification information, such as device type ID, which has the capability of specifying the device type of the terminal 10. The specified language information 82 is identification information, such as language ID, which is able to specify the use language for display character strings. In the present example, as the assumption has been made, the device type information 81 is set to identification information specifying the terminal "A" and the specified language information 82 is set to identification information specifying "English."

Responsively to the reception of the language setting data 80 (step St21 in Fig. 10) , the language management server 40 uses both of the device type information 81 and the specified language information 82 such that language data (display character string data) that conforms to both of the device type of the terminal 10 specified by the information 81 and the language specified by the information 82 is searched in the language management DB 41 (step St22). The searched language data is returned to the terminal 10 (step St23) . As a result, in the present example, as the language data corresponding to both the "terminal A" on the device type information 81 and "English" on the specified language information 82, language data that has been searched in the English character string DB 42 in the language management DB 41 for the terminal "A" is subjected to transmission to the terminal 10.

In response to the reception of the language data (i.e., the English character string DB 42) from the language management server 40, the terminal 10 starts downloading the language data (step St7), during which time the received language data is preserved in a predetermined storage region of the memory (RAM 105). On completion of the preservation, the terminal 10 analyzes the language data to determine if or not the download is completed (step St8). If the determination shows the result of YES (completion of download) , the terminal 10 provides, as shown in Fig. 9, the display of a "download completion/installation start" message screen A3 to notify the user of completing the download operation and starting the installation (step St9). In the message screen A3, a predetermined message saying "the download has been completed. Do you want to start installation?" and both a "start" button B4 for starting the installation and a "cancel" button B5 for canceling the installation are displayed.

The terminal 10 will then respond to an operation to push down the "start" button B4. That is, this button B4 is pushed down, the installation processing is started (step St10), with which the character strain DB 54 in the memory (RAM 105) is updated to the downloaded language data, that is, the English character string DB 42. When the installation starts, the display of an "under installation processing" message screen A4 is provided as shown in Fig. 9 (step St11). The completion of the installation (step St12) results in finishing the processing.

Accordingly, thanks to the foregoing processing,the display character strings 54b in the character string DB 54 in the memory (RAM 105), i.e., the "Japanese" character strings based on the use language in the initial state, are rewritten, for each message ID, into the "English" character strings 42b in the English character string DB 42.

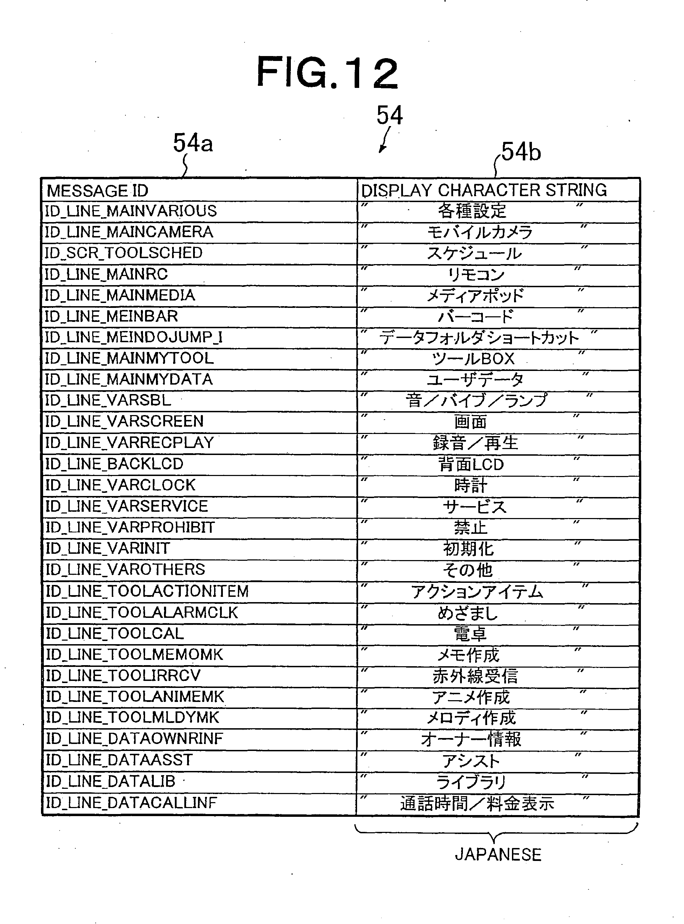

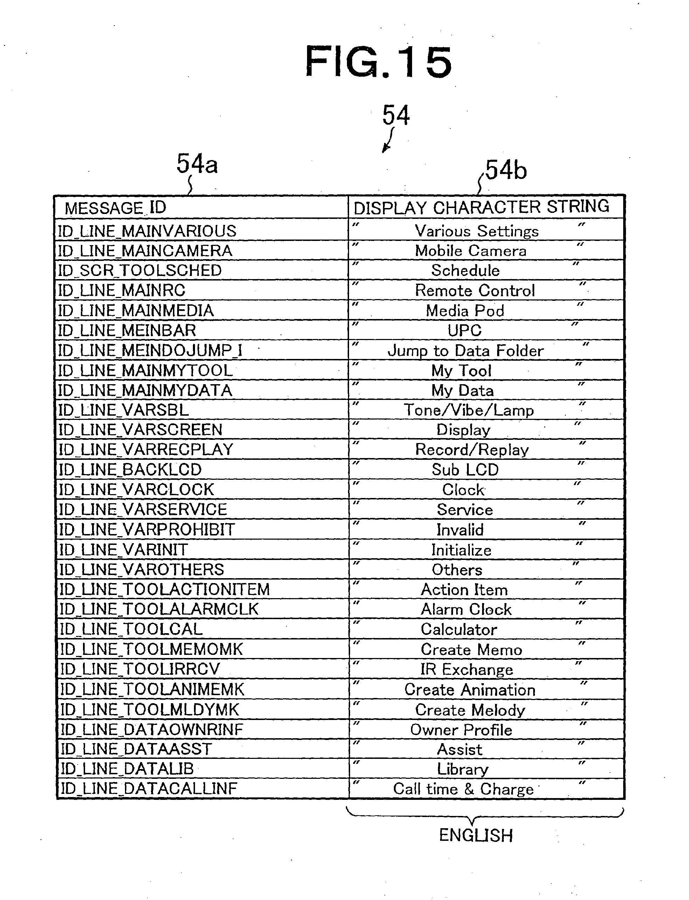

Figs. 12 to 14 exemplify in detail the data structure of the character string DB 54 of the terminal 10 in its initial state, while Figs. 15 to 17 , which correspond to Figs. 12 to 14 respectively, exemplify in detail the data structure of the character string DB 54 in the terminal 10 which has been subjected to the download and installation of the language data of the English character string DB 42 from the language management server 40.

When making a comparison between the after-installation character string DB 54 shown in Figs. 15 to 17 and the initial character string DB 54 shown in Figs. 12 to 14, the message IDs 54a are as initially set with no changes, but only the display character strings 54b are rewritten from "Japanese" strings to "English" strings. As a result, the initial display character strings, such as various menus and messages, displayed in "Japanese" on the display unit 103 of the terminal 10 are changed (updated) to those displayed in "English."

This is distinctively different from the conventional configuration, which deteriorates efficiency of use of the memory. The reason is that it is necessary to add more display character strings to the memory of a terminal as the number of languages increases to cope with the multi-language demand. In contrast, such a conventional difficulty can be removed in the present embodiment.

More specifically, in the present embodiment, a user who wants changes of languages to be used uses the Web-connection function of the terminal 10 to access the language management server 40. This access allows the user to select a new use language on the menu screen A1 formed with the language setting contents form 73a provided from the server 40. Selecting the desired language results in that the language setting data 80 including the device type information 81 and the specified language information 82 is transmitted to the server 40. Thus the server 40 uses the language setting data 80 to search the language management DB 41 conforming to the data 80 so that corresponding language data is found out. The searched language data is then sent to the terminal 10, in which the received language data is preserved for installation. This installation causes the currently set language to be replaced by the desired language. Therefore, for coping with multi-languages, it is enough to prepare the management information, the initial character strings, a memory region in which the downloaded language data is preserved, and the installation execution program. The preparation is still easier though.

Accordingly, the system according to the present embodiment is able to provide the following advantages.
(1) Although the conventional configuration requires that each character string in each type of language be stored in the memory of a terminal, the terminal according to the present embodiment can be simplified in this respect. Specifically, it is sufficient for the terminal to have a storage region for memorizing downloaded data from the Web and have the installation execution program. This simplified configuration makes it possible to cope with the multi-language system.
(2) Which language is used depends on Web contents to be desired, so that the specifications of the terminal have nothing to do with the kinds of languages to be used.
(3) Even after shipment of terminals, the terminals can be subjected to addition of character strings and maintenance thereof which are carried out by users in an easier fashion.
(4) In the configuration of JP-A-2002-77415, information from a server undergoes selection at a gateway working based on a language desired by a terminal (user) , before the information is provided to the terminal. In this respect, the present embodiment is different in that language data itself to be desired is downloaded and installed to and in the terminal. It can therefore be expected to have usages different from that disclosed by the above publication.

By the way, various modified constructions are applicable to the system according to the present invention.

For example, the construction according to the foregoing embodiment, in which the data of desired languages are downloaded from the language management server to the mobile communication device via the wireless section, is not a definitive list. A modification is to employ a communication interface such as serial interface or USB (Universal Serial Bus) to connect a PC (personal computer) and the mobile communication device for transmitting the data of the desired languages to be set as display character string data in the mobile communication device. Another modification is concerned with a mobile communication device to which an external storage such as memory card. In such a device, the data of display character strings in each of multi-languages can be stored in advance to display the data on the device. By way of example, in the configuration shown in the foregoing item (1), instead of the language management server, a computer including PCs can be used. In the configuration shown in the foregoing item (2) , an external storage such as memory card can be used.

Furthermore, the foregoing configuration in relation to the control programs can be modified as well. In the foregoing embodiment, as described, the control programs of the terminal include the OS, communication program, browsing program, and installation execution program and the control programs of the language management server include the OS, communication program, and browsing program. In this respect, the present invention can be modified to have any control program configuration as long as the same functions as those in the foregoing embodiment are provided.

For the sake of completeness, it should be mentioned that the foregoing embodiment and modifications explained so far are not definitive lists of possible embodiments. The expert will appreciates that it is possible to combine the various construction details or to supplement or modify them by measures known from the prior art without departing from the basic inventive principle.

## Claims

1. A multi-language coping support system comprising:
a mobile communication device; and
a language management apparatus communicably connected with the mobile communication device and configured to manage data of display character strings to be used by the mobile communication device,
wherein the mobile communication device comprises
a character-string data base for memorizing the data of the display character strings such that the data of the display character strings are associated with message IDs;
language selection means for selecting a language on which the display character strings are described;
language-setting data transmission means for transmitting, to the language management apparatus, language-setting data including language specifying information for specifying the language selected by the language selection means and device-type specifying information for specifying the type of the device; and
data base update means for updating, for every message ID, th data of the display character strings stored in the character-string data base, on the basis of the data of the display character strings transmitted from the language management apparatus according to the language-setting data, and
the language management apparatus comprises
a language management data base in which, for every type of mobile communication device and every use language, the data of the display character strings are stored in association with the message IDs;
data base search means for searching the language management data base for data of display character strings conforming to both the type of the mobile communication device specified by the device-type specifying information and the use language specified by the language specifying information in response to a reception of the language-setting data; and
language-data transmission means for transmitting to the mobile communication device the data of the display character strings searched by the data base search means.

2. The system according to claim 1, wherein
said language selection means is configured to select the language used by the data of the display character strings as a user has a look at a display screen on a predetermined language-setting contents form and
said language management apparatus further comprises contents form providing means for providing the language-setting contents form.

3. The system according to claim 1, wherein said language management apparatus is a server connected to a communication network communicably connected to the mobile communication device via a base transceiver station.

4. The system according to claim 1, wherein said language management apparatus is a computer communicably connected to the mobile communication device via a predetermined communication interface.

5. The system according to claim 1, wherein said language management apparatus is an external storage connected to the mobile communication device.

6. A mobile communication device wherein data of display character strings is managed by a language management apparatus, said device comprising:
a character-string data base for memorizing the data of the display character strings such that the data of the display character strings are associated with message IDs;
language selection means for selecting a language on which the display character strings are described;
language-setting data transmission means for transmitting, to the language management apparatus, language-setting data including language specifying information for specifying the language selected by the language selection means and device-type specifying information for specifying the type of the device; and
data base update means updating, for every message ID,the data of the display character strings stored in the character-string data base, on the basis of the data of the display character strings transmitted from the language management apparatus according to the language-setting data.

7. A language management apparatus communicably connected to a mobile communication device and configured to manage data of display character strings used by the mobile communication device, said apparatus comprising:
a language management data base in which, for every type of mobile communication device and every use language, the data of the display character strings are stored in association with message IDs;
data base search means for searching, in response to a reception of language-setting data including language specifying information for specifying the language selected by the language selection means and device-type specifying information for specifying a type of the device, the language management data base for data of display character strings conforming to both the type of the mobile communication device specified by the device-type specifying information and the use language specified by the language specifying information; and
language-data transmission means for transmitting to the mobile communication device the data of the display character strings searched by the data base search means.

8. A multi-language coping support method which is performed by a system comprising a mobile communication device and a language management apparatus communicably connected with the mobile communication device and configured to manage data of display character strings to be used by the mobile communication device, said method comprising steps of:
making a character-string data base of the mobile communication device memorize the data of the display character strings such that the data of the display character strings are associated with message IDs;
making a language management data base of the language management apparatus memorize, for every type of the mobile communication device and every use language, the data of the display character strings in association with the message IDs;
selecting, at the mobile communication device, a language on which the display character strings are described;
transmitting, from the mobile communication device to the to the language management apparatus, language-setting data including language specifying information for specifying the language selected and device-type specifying information for specifying a type of the device;
searching the language management data base of the language management apparatus for data of display character strings conforming to both the type of the mobile communication device specified by the device-type specifying information and the use language specified by the language specifying information in response to a reception of the language-setting data;
transmitting, from the language management apparatus to the mobile communication device, the data of the display character strings searched; and
updating, at the character-string data base of the mobile communication device, for every message ID, the data of the display character strings stored in the character-string data base, on the basis of the data of the display character strings transmitted from the language management apparatus according to the language-setting data.
